# EUROPEAN PATENT SPECIFICATION

(11) **EP 4 403 470 B1**
(45) Date of publication and mention of the grant of the patent: **24.12.2025**
(21) Application number: 24152183.0
(22) Date of filing: 16.01.2024
(51) Int. Cl.: B64D 29/08

(54) **PRESSURE-RELEASE LATCH WITH TENSION CALIBRATION**
DRUCKAUSLÖSEVERRIEGELUNG MIT SPANNUNGSKALIBRIERUNG
VERROU DE LIBÉRATION DE PRESSION AVEC ÉTALONNAGE DE TENSION

(30) Priority: 19.01.2023 US 202318099235
(43) Date of publication of application: 24.07.2024
(73) Proprietor: QPR, Inc., Berea Ohio 44017 (US)
(72) Inventor: MC CUTCHAN, Ben Ona, Statesville, 28677 (US)
(74) Representative: SBD IPAdmin

(56) References cited:
- CN-A- 104 929 455
- CN-A- 106 639 699
- CN-A- 111 328 360
- US-A1- 2002 195 827
- US-A1- 2014 035 296

## Description

### Field of The Invention

The invention relates to the field of blowout or pressure release latches for holding closed a moveable access panel on any structure. More specifically, the invention relates to an aircraft, pressure-release latch having a calibration mechanism that adjusts the level of pressure needed to automatically open the latch.

### Background of The Invention

A pressure release latch is a type of latch that is used to secure access panels on land vehicles, aircraft, or other structures that may experience an excessive buildup of pressure within the compartment enclosed by the door panel. Pressure release latches have many applications but are commonly used to secure the access panels of an aircraft's engine housing. When a predetermine radiating legs d, excessive level of pressure ("blowout force") builds up inside the engine housing, the latches are designed to automatically unlock/open, which enables the door panel to pop open to avoid damaging the door panel, surrounding aircraft housing or frame, or components within the compartment. Prior art pressure-release latches typically also include a manual actuator that can be used to open the door panel from the outside in order to service components within the compartment.

Prior art pressure-release latches are typically complicated and heavy, which is especially undesirable for aerospace application. Therefore, there is a need for a lighter and more compact pressure-release latch than provided in the prior art. CN106639699A discloses a latch where one end of a leg of each of the torsion springs engages with the countersink of a corresponding one of the socket screws. The socket screws can be turned to adjust the loads of the corresponding springs and, in turn, the load from the hex bolt. CN104929455A discloses a latch with housing, and a calibration screw and spring which is received through the bore of the housing. US2002/195827A1 discloses a latch with a biasing mechanism having a tensioning screw engaging spring, and which is provided through an aperture of housing. US20141035296A1 discloses a latch with a biasing member in contact with base member which is provided through threaded aperture of the housing.

Additionally, prior art pressure-release latches typically use torsion springs to create their latch locking force, and do not have the ability to adjust the torsion force created by those springs when the latch is assembled. Because torsion springs have a large variability in bias properties even within the same lot or successive lots, the manufacturer must swap out torsion springs when the completed assembly does not perform as required, i.e., open at a required blowout force. Therefore, there is also a need for a pressure-release latch that has opening force calibration means to accommodate the variability of torsion force tolerances of the springs used in their manufacture.

### Summary of the Invention

According to the invention, the present disclosure provides a pressure-release latch as defined in claim 1. Optional features of the invention are set out in the dependent claims.

The invention comprises a pressure release latch that is more compact, efficient, and lightweight than prior art pressure release latches. The novel pressure release latch also includes means for adjusting the opening force required to unlock the latch and open the door panel. The novel pressure release latch can be manually opened from outside the door panel by pulling an actuator arm, which has high visibility when positioned in the unlocked/open position even if the door panel appears to be closed.

In preferred embodiments, the pressure release latch mounts to the inside of a door panel near the free-swinging edge of the door panel that can only rotate outwardly. The latch includes a latch bolt that is movable between open and closed positions by an actuator. In the closed position, the actuator locks the latch bolt in place with a latch bolt head abutting the inside surface of the frame surrounding the door panel so that the door panel cannot rotate outwardly. When excessive pressure on the inside of the door panel creates an opening force on the latch bolt that exceeds a predetermined opening force, the actuator automatically unlocks and moves the latch bolt to the open position, which retracts the latch head from contact with the door frame so that the door panel can open and relieve the internal pressure.

In one preferred embodiment, the latch bolt is pivotally mounted to a latch base and is restrained at one end by a spring-biased, toggle-linkage tensioner. In accordance with the mechanical advantage/leverage of the toggle-linkage tensioner in various configurations, the latch bolt releases soon after the rotational force exerted on the latch head created by the blowout force exceeds an opposed, pre-designed, rotational restraining force exerted on the shank end of the latch bolt by the toggle-linkage tensioner. This "latch opening force" on the toggle linkage is selected during assembly by adjusting the degree of deflection (preloaded bias) of the toggle-linkage spring. When that condition occurs, the toggle-linkage tensioner will have deflected its bias spring and rotated to a configuration where the angular orientation of its links relative to one another and the latch bolt itself no longer exert enough mechanical leverage on the latch bolt shank to keep the latch bolt from rotating to the open position. Thereafter the bolt is free to continue rotation to a more fully open position.

In preferred embodiments, the bias force exerted by the spring on the toggle linkage can be calibrated/adjusted to modify the latch opening force. In one preferred embodiment, the spring comprises a torsion spring and the bias force is adjusted by changing the amount of pre-tension (angle of deflection from its free position) in the torsion spring. Preferably, the pre-tension can be adjusted in a range of plus or minus fifteen percent. Because of this adjustment feature, the latch opening force can be calibrated to meet specific latch opening force specifications without disassembling the latch and replacing the torsion spring as is typical with prior art pressure-release latches.

In one preferred embodiment, the pressure release latch releasably locks closed a door panel on the frame to which the door panel is hingedly connected. The latch housing has a proximal end, distal end, top side, bottom side, a central aperture, and means for mounting the bottom side of the housing to the door panel. Preferably, the mounting means comprises a plurality of opposed, mounting tabs. Each tab has an aperture through which a fastener is inserted to mount the latch on the inner surface of the door panel.

The latch includes a latch bolt having an elongate shank with a distal end, proximal end, and a head formed on the proximal end. The shank of the latch bolt is mounted by a first pivot pin to the top side of the base near the proximal end of the housing. The latch bolt is rotatable between a closed position that locks the door panel closed and an open position that allows the door to swing open. The head of the latch bolt abuts the frame when the latch bolt is oriented in the closed position.

A latch bolt actuator is mounted by a second pivot pin to the top side of the base near the distal end of the housing and is connected to the shank of the latch bolt. The actuator preferably includes means for manually rotating the latch bolt between the closed and open positions from outside the door panel. In a preferred embodiment, the manual rotating means comprises an actuator arm connected to the shank of the latch bolt between the distal end of the shank and the first pivot pin. The actuator arm extends from the shank through the central aperture in the base. The actuator arm has a head formed at its free end that seats flush within the outer surface of the door panel when the latch is in the closed position, and extends outwardly from the door panel when the latch is in the open position so that a technician can more readily recognize that the latch is open even when the door appears to be shut.

The latch bolt actuator also includes means for locking the latch bolt in the closed position, and means for means for automatically unlocking and moving the latch bolt to the open position when a predetermined opening force is applied to the latch bolt. In one preferred embodiment, the latch bolt actuator comprises a spring-biased, toggle-linkage tensioner pivotally mounted at one end by a second pivot pin to the distal end of the housing and pivotally connected at the other end to the bolt shank. The linkage locks the latch bolt in the closed position, and automatically unlocks and moves the latch bolt to the open position when a predetermined opening force is applied to the latch bolt.

In one preferred embodiment, the spring-biased, toggle-linkage tensioner comprises a restraining arm, a lever arm, and a spring. The restraining arm has a distal end, and a proximal end pivotally connected to the latch bolt shank by a first linkage pin. The lever arm has a proximal end pivotally connected to the distal end of the restraining arm by a second linkage pin, and a distal end pivotally mounted to the second pivot pin. The spring biases the lever arm and restraining arm towards the head of the latch bolt. Preferably, the spring comprises at least one coil spring wound around the second pivot pin and has first and second protruding legs. The first leg sits in contact with at least one of the linkage pins when the latch is oriented in at least the closed position. In preferred embodiments, the tensioner includes a pair of restraining arms mounted on opposed sides of the lever arm and the latch bolt. The latch may also include a second torsion spring wrapped around the first pivot pin that biases the latch bolt toward the open position.

The latch has means for calibrating the magnitude of the predetermined opening force required to automatically release the locking means. Preferably, the calibrating means comprises a screw mechanism that changes the degree of deflection of the coil spring of the tensioner when the latch is oriented in the closed position. In one preferred embodiment, the screw mechanism comprises a calibration screw and a capture slot formed in a hinge bracket that houses the second pivot pin. The calibration screw can be extended into and retracted from the capture slot. The second leg of the coil spring sits in the capture slot in contact with the adjustment screw so that movement of the calibration screw within the capture slot changes the degree of deflection of the coil spring and the force it exerts on the toggle linkage.

The first pivot pin and the second linkage pin define an over-center axis. The toggle linkage is arranged so that the first linkage pin is out of alignment with the over-center axis when the latch is in the closed position. In operation, the latch bolt moves to the open position when the force on the latch bolt rotates the latch bolt and urges the toggle linkage from an angular configuration to a linear configuration aligned with the over-center axis, and then to an opposed angular configuration. The first linkage pin rotates past the over-center axis to move the latch from the closed position to the open position when the predetermined opening force is exceeded. The toggle linkage is constructed so that rotation of the first linkage pin past the over-center axis releases all restraining force of the toggle linkage on the latch bolt.

### Brief Description of the Drawings

Fig. 1 is a bottom perspective view of a pressure-release latch in accordance with a preferred embodiment of the invention;
Fig. 2 is bottom plan view of the pressure-release latch of Fig. 1;
Fig. 3 is a cross-section taken along lines 3-3 of Fig. 2;
Fig. 4 is a top perspective view of the pressure-release latch of Fig. 1;
Fig. 5 is an assembly view of the pressure-release latch of Fig. 1;
Fig. 6 is a bottom plan view of the pressure-release latch of Fig. 1 installed on a door panel of an aircraft frame; and,
Figs. 7a-c are sequential side elevations of the pressure-release latch in closed, partially-open and fully-open configurations, respectively.

### Description of The Preferred Embodiments

For the purpose of illustrating the invention, several embodiments of the invention are described with respect to the accompanying drawings. However, it should be understood by those of ordinary skill in the art that the invention is not limited to the precise arrangements and instrumentalities shown therein and described below. Throughout the specification, like reference numerals are used to designate like elements.

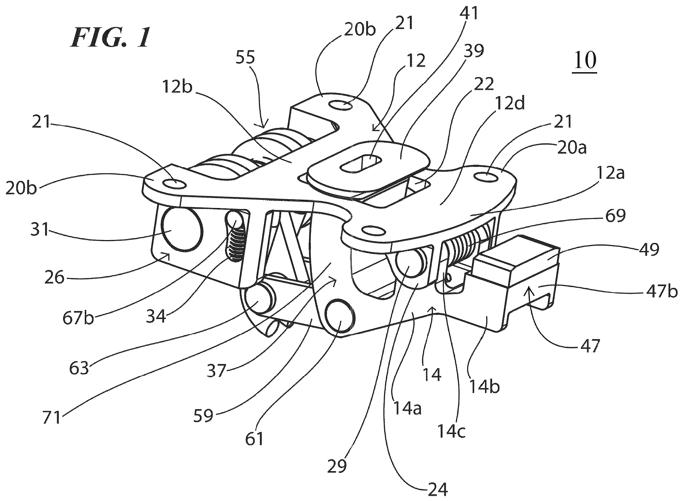

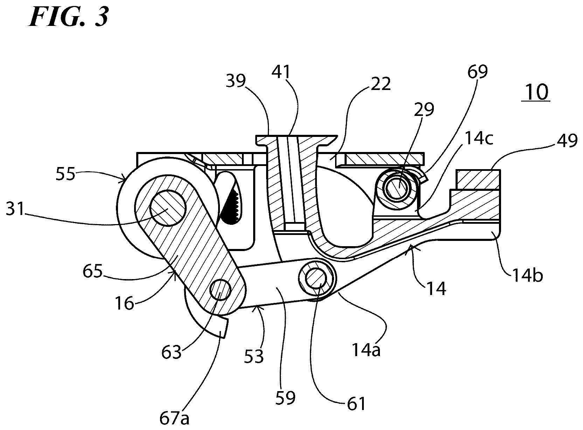

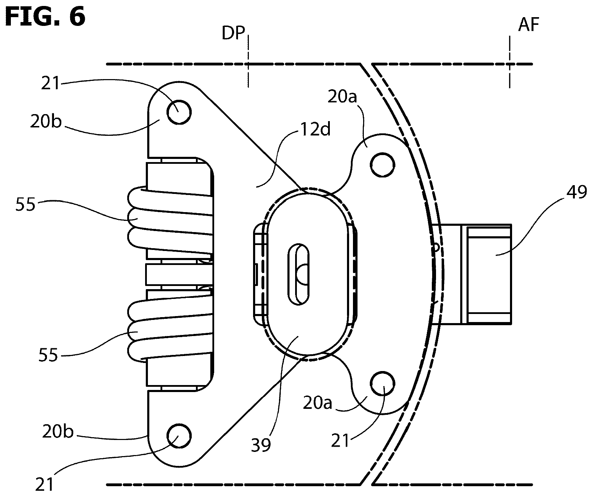

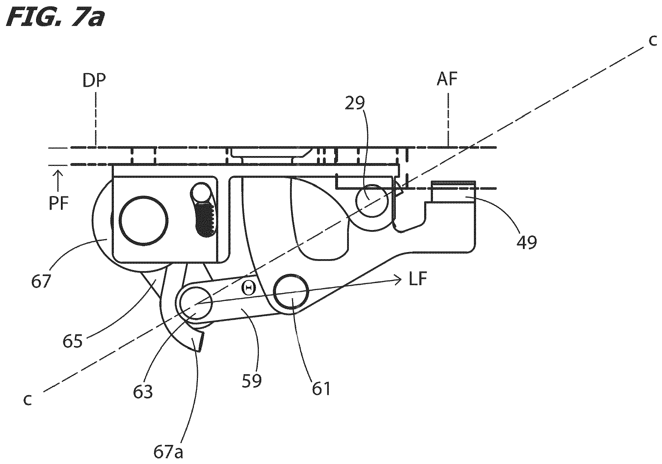

A latch in accordance with preferred embodiments of the invention is shown in Figs. 1- 7c and is designated generally by reference numeral 10. The latch 10 is shown oriented horizontally in Figs. 3 and 7a-c for use with, and installed on, a generally-horizontally-oriented door panel "DP" of an aircraft. The door panel DP covers an access port in the aircraft frame AF such as the engine housing. However, it should be understood that the latch 10 can be used with a door panel DP having any orientation, including a vertical orientation.

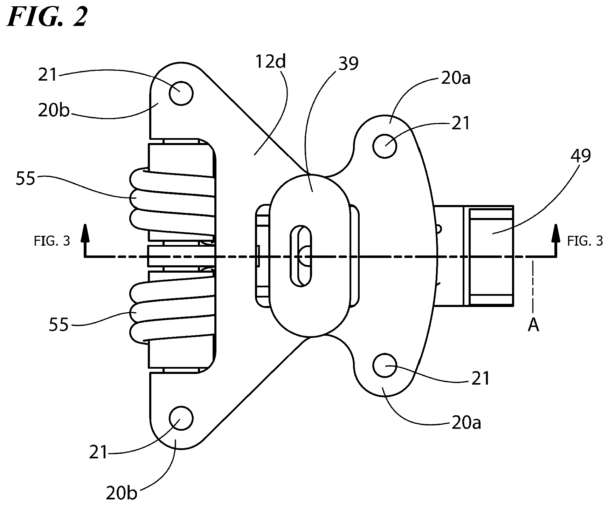

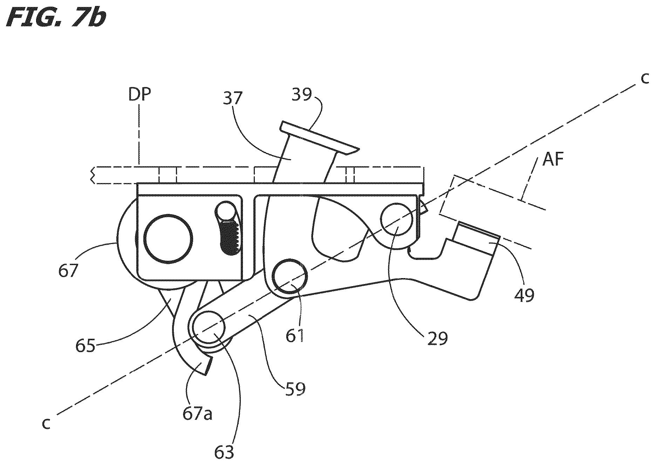

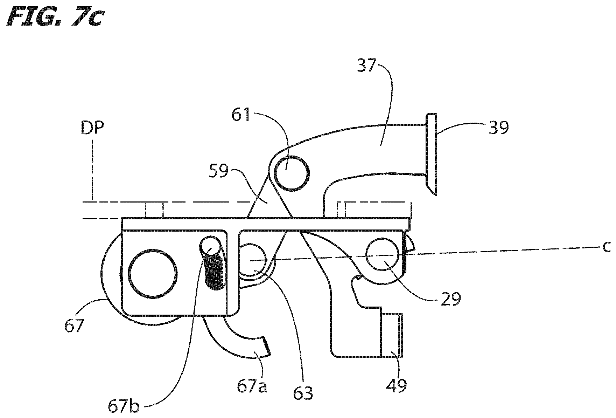

The latch 10 is operable between a closed position such as shown in Figs. 1-4, 6 and 7a, intermediate positions such as shown in Fig. 7b, and a fully-open position such as shown in Fig. 7c to provide temporary access through the access port. In preferred embodiments, the latch 10 has a symmetrical construction about a central axis "A" shown in Fig. 2. For this reason, the latch 10 is illustrated from only one side in Figs. 1-7. Along the central axis A, the reference point for the terms "proximal" and "distal" is the head 14b of the bolt 14, which abuts the aircraft frame AF when the latch 10 is closed.

The latch 10 generally includes a base 12, a pivotable latch bolt 14, and a bias-adjustable bolt actuator, generally designated by reference numeral 16. The lock bolt 14 is pivotally connected to the proximal end 12a of the base 12, while the bolt actuator 16 is mounted on the distal end 12b of the base 12. As described in greater detail below, the bolt actuator 16 performs multiple functions. First, it moves the latch bolt 14 between open and closed positions by application of a manual force to the manual actuator arm 37 described below. Second, it locks the latch bolt 14 in the closed position with sufficient force so that the door panel DP does not open during normal flight conditions. Third, it unlocks and moves the latch bolt 14 from the closed position to the open position when a predetermined opening force is applied to the interior of door panel DP usually caused by an excessive build-up of pressure inside the aircraft housing.

In the embodiment shown in Figs. 1-7c, the base 12 has a generally-planar, irregular shape including opposed, proximal mounting tabs 20a, opposed, distal mounting tabs 20b, a central aperture 22, a top side 12c, and a bottom side 12d. Because the latch 10 can be utilized on door panels DP having a variety of orientations, the term bottom side 12d refers to the side of the base 12 that abuts the door panel DP when the latch 10 is fastened thereto, while the top side 12c refers to the opposite side to which the several structural elements of the latch 10 are mounted. Each tab 20 has an aperture 21 through which a fastener (not shown) is inserted to mount the latch 10 on the inner surface of the door panel DP as shown in Fig. 7a.

The door panel DP is pivotally connected to the aircraft frame AF by one or more hinges (not shown) at a hinged end so that the opposed latch end of the door panel can swing between open and closed positions. In preferred embodiments, the latch 10 is mounted close enough to the latch end of the door panel DP so that the head 14b of the latch bolt 14 can engage and abut the inner surface of the aircraft frame AF surrounding the door panel and prevent the door panel DP from opening until a predetermined internal air pressure is exceeded or the latch is intentionally opened by an operator. In the embodiment shown in Figs. 7a-c, the door panel DP can only swing outwardly from its closed position relative to the aircraft frame AF; however, it should be appreciated by those of ordinary skill in the art that the latch 10 would work similarly and just as effectively if mounted on the outside of a door panel that is only capable of swinging inwardly if an excessive negative pressure built up in the inside of the door panel DP.

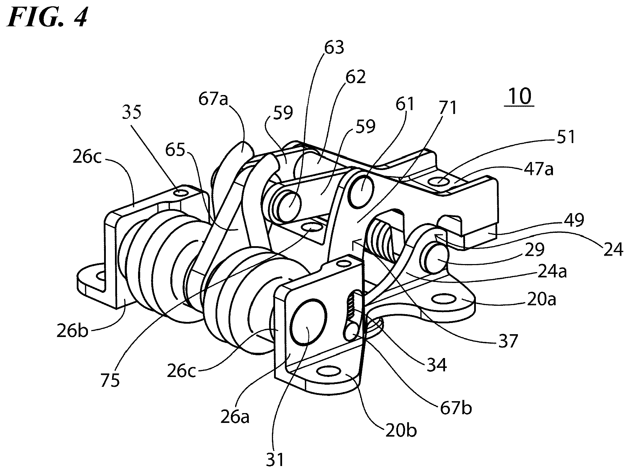

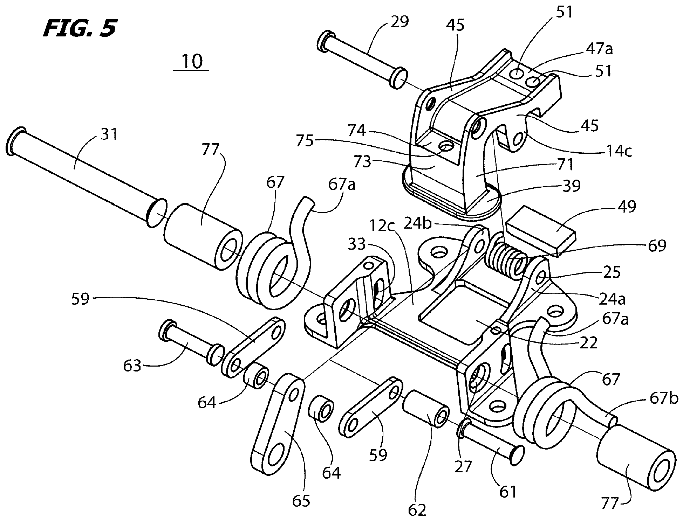

Referring to Figs. 4 and 5, the base 12 includes a pair of opposed, proximal hinge brackets 24 and distal hinge brackets 26, both of which are fixed to and project from the top side 12c. The brackets 24, 26 have opposed outer planar surfaces 24a, 26a and opposed inner planar surfaces 24b, 26b, which extend transverse to the plane of the top side 12c of the base 12. The brackets 24, 26 have a circular bore 25, 27, respectively, extending through the planar surfaces of the brackets 24, 26 and having a central axis extending transverse to the planar surfaces 24a, 24b and 26a, 26b, respectively, and generally parallel to the plane of the top side 12c of the base 12. Each bore 25, 27 supports the ends of a proximal and distal pivot pin 29, 31, respectively, as described below. Each of the distal brackets 26 has a spring capture slot 33 extending through the planar surfaces 26a, 26b, and a threaded bore 35 extending from the edge surfaces 26c of the bracket 26 to the spring capture slot 33. A calibration screw 34 engages the threaded bore 35 and is long enough so that a portion extends into the spring capture slot 33 as best seen in Figs. 3 and 4.

In the embodiment shown in Figs. 1-7c, the central aperture 22 in the base 12 has a generally-square shape having dimensions slightly larger than the head 39 of a manual actuator arm 37 (described below), which is used to lock the latch 10 by depressing the head 39 with force sufficient to overcome the locking force of the bolt actuator 16, or open the latch 10 by prying the head 39 outwardly using a tool, such as a flathead screwdriver, inserted in a slot 41 formed in the head 39.

Referring to Figs. 1 and 3, the latch bolt 14 has an elongate shank 14a with an integrally-formed head 14b at the proximal end, and integrally-formed hinge brackets 14c in the middle for attachment to the proximal pivot pin 29 and proximal hinge brackets 24. In a preferred embodiment shown in Figs. 1-7c, the latch bolt 14 is formed from a pair of distally-spaced plates 45 oriented parallel to one another, and a pair of transversely-extending struts 47a, 47b fixed to the proximal ends of the parallel plates 45. In the embodiment shown in Figs. 1-7c, the struts 47a, 47b have the form of rectangular plates, one or more of which may be integrally formed with the parallel plates 45 or fastened to the plates 45 using welding or other attachment means. When the bolt 14 is configured in the closed position, one strut 47a is aligned in a plane generally parallel to the plane of the base 12, while the second strut 47b is aligned generally transverse to the plane of the base 12. In preferred embodiments, a bumper 49 is fixed to the first strut 47a and is preferably made from an elastomeric material. In this preferred embodiment, the bumper 49 is affixed to the first strut 47a by fasteners that extend through bores 51 in the first strut 47a. As described below, the bumper 49 abuts the aircraft frame AF when the latch is closed and, because it is elastomeric, the bumper 49 compresses to accommodate a small amount of deviation in the thickness of the aircraft frame AF.

The distal end of the bolt shank 14a is connected to the bolt actuator 16. The bolt actuator 16 comprises a toggle linkage, designated generally by reference numeral 53, a linkage tensioner designated generally 55, and the manual actuator arm 37. The toggle linkage 53 comprises a first link pivotally connected to the distal end of the bolt shank 14a and a second link pivotally connected to the distal end of the base 12. The links are pivotally connected to one another.

As best seen in Fig. 4, the first link comprises a pair of opposed restraining arms 59, each of which is pivotally connected the distal end of the latch shank 14a by a first linkage pin 61 and separated by a spacer 62. The second link comprises a lever arm 65, which is pivotally connected at one end to the restraining arms 59 by a second linkage pin 63 and is centrally located between the restraining arms 59 by a pair of spacers 64. The other end of the lever arm 65 is pivotally connected to the base 12 by the distal pivot pin 31. Alignment of the restraining arms 59 and lever arm 65 is important for creating proper force transmission through the latch 10.

In a preferred embodiment, the manual actuator arm 37 is integrally formed with the bolt shank 14a. In this embodiment, the manual actuator arm 37 comprises a pair of plate extensions 71 of the parallel bolt plates 45, which are co-planar with the bolt plates 45 but extend transversely to the length of the bolt shank 14a as best seen in Figs. 1 and 3.

Referring to Fig. 5, a plurality of transverse side struts 73 and a transverse bottom strut 74 (relative to the orientation shown in Fig. 1) extend between and join the plate extensions 71. The actuator head 39 is fixed to the ends of the plate extensions 71. Application of a force to the head 39, either in depression or retraction, causes the latch bolt 14 to rotate about the proximal pivot pin 29. An elongated slot 41 is formed in the head 39, which is constructed to receive the head of a work tool to retract the head 39 by prying. Preferably, the slot 41 extends through the head so that any condensation that forms in the slot 41 will drain through the slot and through a drain hole 75 in the bottom strut 74. As used in this paragraph, "transverse" refers to a direction relative to the plane of the plate extensions 71.

Those of ordinary skill in the art should appreciate that the manual actuator arm 37 need not be integrally formed with the bolt shank so long as its construction can exert a rotational force on the latch bolt 14 sufficient to overcome the locking force of the toggle linkage 53. For example, the plate extensions 71 could comprise separate structural elements pivotally connected to the proximal pivot pin 29, or separate structural elements pivotally connected to the bolt shank 14a at a location different than the pivot pin 29.

In this preferred embodiment, the manual actuator arm 37 is long enough so that the head 39 extends through the central aperture 22 in the base 12 and sits higher than the base 12 as best seen in Fig. 3. This spatial differential allows the head 39 to sit flush with the outer surface of the door panel DP within a cutout in the door panel as best seen in Fig. 7a.

In a preferred embodiment shown in Figs. 1-7c, the linkage tensioner 55 comprises a pair of torsion coil springs 67 surrounding the distal housing pivot pin 31 on opposed sides of the lever arm 65. Each coil spring 67 has a pair of legs 67a, 67b. For easier rotation, the coil springs 67 are seated on bushings 77 surrounding the distal pivot pin 31 as best seen in Fig. 5. The first leg 67a engages the spacers 64 on the second linkage pin 63 that surround the lever arm 65. The second leg 67b is seated in the spring capture slot 33 of its respectively-adjacent distal hinge bracket 26. When the latch is oriented in the closed position, the first legs 67a exert a predetermined force on the latch bolt 14 based on the degree of deflection of the springs 67 from their free position.

The linkage tensioner 55 includes a mechanism for calibrating the tension exerted by the coil springs 67. The calibration mechanism adjusts the tension by changing the degree of rotation of the springs when they are preloaded. The calibration mechanism comprises the spring capture slot 33 and the calibration screw 34. The capture slot 33 is longer than the diameter of the first leg 67a to allow movement/position adjustment along the length of the slot 33. In the closed position, each spring 67 is deflected in the clockwise direction (relative to the image shown in Fig. 3) from its free position so that the second leg 67b is biased in a downward direction (relative to the image shown in Fig. 3) until it contacts the calibration screw 34. The torsional bias force of the second leg 67b on the second linkage pin 63 is adjusted by extending or retracting the portion of the calibration screw 34 that extends into the capture slot 33, which causes the degree of deflection of the torsion spring 67 to increase or decrease, respectively. In the embodiment shown in Figs. 1-7c, the torsion spring bias force is increased by extending the calibration screw 34 into the capture slot 33 and pushing the base end 67a of the spring 67 toward the bottom of the slot 33. In contrast, the torsional spring force is reduced by retracting the calibration screw 34 and allowing the base end 67a of the spring 67 to move toward the top of the slot 33.

Preferably, a second torsion spring 69 is mounted on and surrounds the proximal base hinge pin 29. One leg of the spring 69 abuts the bolt shank 14a while the other abuts the base 12. The second torsion spring 69 is oriented so that it normally urges the latch bolt toward the open position as shown in Fig. 7c.

Operation of the latch 10 is illustrated in Figs. 7a-c, which show the latch installed on an aircraft door panel DP. Fig. 7a (along with Figs. 1-4) shows the latch 10 oriented in the closed position. In this orientation, the latch bolt 14 is restrained in the closed position by a counterclockwise locking force exerted on the latch bolt 14 by the bolt actuator 16. In Fig. 7a, the locking force is illustrated by force vector LF. More specifically, the restraining arms 59 of the toggle linkage 53 exert a locking force LF on the first linkage pin 61, which is connected to the shank 14a of the latch bolt 14. That locking force LF exerts a counterclockwise moment on the latch bolt 14 about the proximal pivot pin 29, which causes the latch bolt 14 to rotate until the head 14b abuts the aircraft frame AF. The moment is in the counterclockwise direction because the force vector LF is skew to an over-center axis C between the second linkage pin 63 and the proximal pivot pin 29. The magnitude of the counterclockwise moment created by the locking force LF at the first pivot pin 29 is directly proportional to the angle theta (θ) formed between the over-center axis C and the locking force vector LF as shown in Fig. 7a. More specifically, the magnitude of the locking force LF creating the counterclockwise moment is equal to the locking force LF multiplied by the sine of the angle theta (θ) formed between the over-center axis and the locking force vector LF as shown in Fig. 7a. In this orientation, the greater the angle theta, the greater the clockwise force created by the internal pressure of the compartment on the latch bolt head 14b (or, alternatively, bumper 49) would be required to overcome the locking force LF. When the internal pressure of the compartment is equal to the atmospheric pressure outside the compartment, the clockwise force on the latch bolt head 14b (or, alternatively, bumper 49) is insufficient to overcome the counterclockwise moment at the first pivot pin 29 created by the locking force LF. In this orientation, the force on the latch bolt head 49 created by the internal pressure of the compartment is insufficient to overcome lock force LF.

As illustrated in Fig. 7a, the portion of the bumper 49 that traverses the phantom lines is meant to illustrate that the bumper 49 compresses because it is elastomeric. In preferred embodiments, the force of the bumper 49 does not cause any depression in the aircraft frame.

Fig. 7b shows the latch in a partially open position after the internal pressure created a force sufficient to overcome the locking force LF of the bolt actuator 16. More specifically, as the internal pressure on the door panel builds up, the force on the latch bolt head 14a increases to a critical point where the clockwise moment on the latch bolt 14 exceeds the counterclockwise moment of the locking force LF. When this occurs, the latch bolt 14 rotates clockwise causing the first linkage pin 61 to swing past the over-center axis C and the latch 10 unlocks. In this position, internal pressure is relieved through a gap between the door panel DP and the aircraft frame AF sufficient to avoid damage to the internal components.

When the first linkage pin 61 swings past the over-center axis C, the locking force LF of the bolt actuator 16 transitions from a counterclockwise moment to a clockwise moment until the first leg 67a disengages from the second linkage pin 63. After that point, the rotational force of the second torsion spring 69 continues to move the latch bolt to a more fully-open position shown in Fig. 7c wherein the latch bolt 14 is extending nearly perpendicular to the base 12. In this position, the door panel DP can be fully opened to allow a worker to access the internal components of the aircraft. The partially and fully open positions shown in Figs. 7b and 7c, respectively, can also be achieved by prying the manual actuator arm 37 open from outside the door panel by using a work tool inserted in the slot 41 in the actuator head 39 to pull the manual actuator arm 37 out.

Referring to Fig. 7c, when the latch 10 is configured in the fully-open position, the head of the manual actuator arm 39 protrudes from the door panel and is very visible, and remains highly visible until it is returned to the closed position. Therefore, even if the door panel DP is closed, the protruding head 39 serves as a visual safety indicator that the door panel DP is not secured.

It will be readily understood by those in the mechanical arts that the dimensions of the various components of the invention can be selected to operate as described above without limitation to the particular configuration, proportions and dimensions shown in the preferred embodiment.

## Claims

1. A pressure-release latch (10) configured to releasably lock closed a door panel (DP) on a frame to which the door panel is hingedly connected, comprising:
a. a base (12) having a proximal end (12a), distal end (12b), top side (12c), bottom side (12d), a central aperture (22), and means configured to mount the bottom side of said base to the door panel;
b. a latch bolt (14) having an elongate shank (14a) with a distal end, proximal end, and a head (14b) formed on the proximal end, said shank of said latch bolt being mounted by a first pivot pin (29) to the top side of said base near the proximal end of said base, and being rotatable between a closed position that locks the door panel closed and an open position that allows the door panel to swing open;
c. a latch bolt actuator (16) mounted by a second pivot pin (31) to the top side of said base and connected to the shank of said latch bolt, said latch bolt actuator including:
i. manual rotation means for rotating said latch bolt between the closed and open positions from outside door panel;
ii. lock means for locking the latch bolt in the closed position;
iii. automatic unlock means for rotating said latch bolt to the open position when a predetermined opening force is applied to the latch bolt; and,
iv. calibration means for calibrating the magnitude of the predetermined opening force required to automatically release said locking means,
wherein said latch bolt actuator (16) comprises a spring-biased toggle-linkage tensioner (55) pivotally mounted at one end by the second pivot pin (31) to the distal end of said base (12) and pivotally connected at the other end to said shank (14a)
wherein said spring-biased, toggle-linkage tensioner (55) includes:
a. a restraining arm (59) having a distal end, and a proximal end pivotally connected to said latch bolt (14a) by a first linkage pin (61);
b. a lever arm (65) having a proximal end pivotally connected to said distal end of said restraining arm (59) by a second linkage pin (63), and a distal end pivotally mounted to said second pivot pin (31); and,
c. a spring (67) that biases said lever arm (65) and restraining arm (59) towards the head (14b) of said latch bolt,
wherein said spring comprises a coil spring (67) wound around said second pivot pin (31) and having first and second radiating legs (67a, 67b), wherein the free end of said first leg (67a) sits in contact with at least one of said linkage pins (61, 63) when said latch is oriented in at least the closed position,
wherein said calibration means comprises a screw mechanism that changes the degree of deflection of said coil spring (67) when said latch is oriented in the closed position,
wherein said screw mechanism comprises a capture slot (33) and a calibration screw (34) that can be extended into and retracted from said capture slot, and wherein the free end of said second leg (67b) sits in said capture slot (33) in contact with said calibration screw (34) so that movement of said screw within said capture slot (33) changes the degree of deflection of said coil spring (67) and the force it exerts on the toggle-linkage tensioner (55), and
wherein the base (12) comprises a pair of distal hinge brackets (26) and the capture slot (33) extends through planar surfaces (26a, 26b) of the distal hinge brackets (26).

2. The pressure-release latch (10) recited in claim 1, wherein said manual rotation means comprises an actuator arm (37) connected to the shank of said latch bolt between the distal end of the shank and said first pivot pin, wherein said actuator arm extends from said shank through the central aperture in said base;

3. The pressure-release latch (10) recited in any of claims 1 to 2, wherein said first pivot pin (29) and said second linkage pin (63) define an over-center axis, said tensioner being constructed and arranged so that said first linkage pin is out of alignment with said over-center axis in the closed position.

4. The pressure-release latch (10) recited in claim 3, wherein said first linkage pin rotates past the over-center axis to move said latch bolt from the closed position to the open position when the pressure on said latch bolt exceeds the predetermined opening force.

5. The pressure-release latch (10) recited in claim 4, wherein rotation of said first linkage pin past the over-center axis releases all restraining force of said toggle linkage on said latch bolt.

6. The pressure-release latch (10) recited in any of claims 3 to 5, wherein the moment exerted by said tensioner on the latch bolt transitions from a counterclockwise moment to a clockwise moment when said toggle linkage rotates and said first linkage pin crosses said over-center axis.

7. The pressure-release latch (10) recited in claim 1, including a second torsion spring (69) wrapped around said first pivot pin (29) that biases said latch bolt toward the open position.

8. The pressure-release latch (10) recited in any of claims 1 to 7, wherein the restraining arm (59) comprises a pair of restraining arms (59) mounted on opposed sides of said lever arm and said latch bolt.

9. The pressure-release latch (10) recited in claim 2, wherein said actuator arm has a head formed at its free end that seats flush within the outer surface of the door panel when the latch is in the closed position, and extends outwardly transverse to the door panel when the latch is in the open position.

10. The pressure-release latch (10) of any of claims 1 to 9, wherein the head of said latch bolt abuts a frame when said latch bolt is oriented in the closed position.

11. The pressure-release latch (10) of any of claims 1 to 10, including a bumper made of elastomeric material fixed to the head of said latch bolt.

## Patentansprüche

1. Drucklöseverriegelung (10), die dazu konfiguriert ist, ein Türpaneel (DP) lösbar an einem Rahmen zu verriegeln, mit dem das Türblatt gelenkig verbunden ist, umfassend:
a. eine Basis (12), die ein proximales Ende (12a), distales Ende (12b), eine Oberseite (12c), Unterseite (12d), eine zentrale Öffnung (22) und Mittel aufweist, die dazu konfiguriert sind, die Unterseite der Basis an dem Türpaneel zu montieren;
b. einen Riegel (14), der einen länglichen Schaft (14a) mit einem distalen Ende, proximalen Ende und einem am proximalen Ende ausgebildeten Kopf (14b) aufweist, wobei der Schaft des Riegels durch einen ersten Drehstift (29) an der Oberseite der Basis in der Nähe des proximalen Endes der Basis montiert ist und zwischen einer geschlossenen Position, die das Türpaneel geschlossen verriegelt, und einer offenen Position, in der das Türpaneel aufschwingen kann, drehbar ist;
c. eine Riegelbetätigungsvorrichtung (16), die über einen zweiten Drehstift (31) an der Oberseite der Basis montiert und mit dem Schaft des Riegels verbunden ist, wobei die Riegelbetätigungsvorrichtung Folgendes beinhaltet:
i. manuelle Drehmittel zum Drehen des Riegelbolzens zwischen der geschlossenen und der offenen Position von außerhalb des Türpaneels;
ii. Verriegelungsmittel zum Verriegeln des Riegelbolzens in der geschlossenen Position;
iii. automatische Entriegelungsmittel zum Drehen des Riegelbolzens in die offene Position, wenn eine vorgegebene Öffnungskraft auf den Riegelbolzen ausgeübt wird; und
iv. Kalibrierungsmittel zum Kalibrieren der Größe der vorgegebenen Öffnungskraft, die zum automatischen Lösen der Verriegelungsmittel erforderlich ist,
wobei die Riegelbolzenbetätigungsvorrichtung (16) einen federbelasteten Kniehebelspanner (55) umfasst, der an einem Ende durch den zweiten Drehstift (31) schwenkbar am distalen Ende der Basis (12) montiert und am anderen Ende schwenkbar mit dem Schaft (14a) verbunden ist,
wobei der federvorgespannte Kniehebelspanner (55) Folgendes beinhaltet:
a. einen Rückhaltearm (59), der ein distales Ende und ein proximales Ende aufweist, das über einen ersten Verbindungsstift (61) schwenkbar mit dem Riegelbolzen (14a) verbunden ist;
b. einen Hebelarm (65), der ein proximales Ende aufweist, das über einen zweiten Verbindungsstift (63) schwenkbar mit dem distalen Ende des Rückhaltearms (59) verbunden ist, und ein distales Ende, das schwenkbar am zweiten Drehstift (31) montiert ist; und
c. eine Feder (67), die den Hebelarm (65) und den Rückhaltearm (59) in Richtung des Kopfs (14b) des Riegelbolzens vorspannt,
wobei die Feder eine Schraubenfeder (67) umfasst, die um den zweiten Drehstift (31) gewickelt ist und einen ersten und einen zweiten strahlenförmigen Schenkel (67a, 67b) aufweist, wobei das freie Ende des ersten Schenkels (67a) in Kontakt mit mindestens einem der Verbindungsstifte (61, 63) sitzt, wenn die Verriegelung mindestens in der geschlossenen Position ausgerichtet ist,
wobei die Kalibrierungsmittel einen Schraubmechanismus umfassen, der den Auslenkungsgrad der Schraubenfeder (67) ändert, wenn die Verriegelung in der geschlossenen Position ausgerichtet ist,
wobei der Schraubmechanismus einen Aufnahmeschlitz (33) und eine Kalibrierungsschraube (34) umfasst, die in den Aufnahmeschlitz hinein und aus diesem herausgefahren werden kann, und wobei das freie Ende des zweiten Schenkels (67b) in dem Aufnahmeschlitz (33) in Kontakt mit der Kalibrierungsschraube (34) sitzt, so dass Bewegung der Schraube innerhalb des Aufnahmeschlitzes (33) den Auslenkungsgrad der Schraubenfeder (67) und die Kraft, die sie auf den Kniehebelspanner (55) ausübt, verändert, und
wobei die Basis (12) ein Paar distaler Scharnierhalterungen (26) umfasst und der Aufnahmeschlitz (33) sich durch ebene Flächen (26a, 26b) der distalen Scharnierhalterungen (26) erstreckt.

2. Drucklöseverriegelung (10) nach Anspruch 1, wobei die manuellen Drehmittel einen Betätigungsvorrichtungsarm (37) umfassen, der mit dem Schaft des Riegelbolzens zwischen dem distalen Ende des Schafts und dem ersten Drehstift verbunden ist, wobei sich der Betätigungsvorrichtungsarm von dem Schaft durch die zentrale Öffnung in der Basis erstreckt.

3. Drucklöseverriegelung (10) nach einem der Ansprüche 1 bis 2, wobei der erste Drehstift (29) und der zweite Verbindungsstift (63) eine Übertotpunktachse definieren und der Spanner so konstruiert und angeordnet ist, dass der erste Verbindungsstift in der geschlossenen Position nicht mit der Übertotpunktachse ausgerichtet ist.

4. Drucklöseverriegelung (10) nach Anspruch 3, wobei sich der erste Verbindungsstift über die Übertotpunktachse hinaus dreht, um den Riegelbolzen aus der geschlossenen Position in die offene Position zu bewegen, wenn der Druck auf den Riegelbolzen die vorgegebene Öffnungskraft überschreitet.

5. Drucklöseverriegelung (10) nach Anspruch 4, wobei Drehung des ersten Verbindungsstifts über die Übertotpunktachse hinaus die gesamte Rückhaltekraft des Kniehebels auf den Riegelbolzen löst.

6. Drucklöseverriegelung (10) nach einem der Ansprüche 3 bis 5, wobei das von dem Spanner auf den Riegelbolzen ausgeübte Moment von einem Moment gegen den Uhrzeigersinn in ein Moment im Uhrzeigersinn übergeht, wenn sich das Kniehebelgestänge dreht und der erste Verbindungsstift die Übertotpunktachse kreuzt.

7. Drucklöseverriegelung (10) nach Anspruch 1, die eine zweite Torsionsfeder (69) um den ersten Drehstift (29) gewickelt beinhaltet, die den Riegel in Richtung der offenen Position vorspannt.

8. Drucklöseverriegelung (10) nach einem der Ansprüche 1 bis 7, wobei der Rückhaltearm (59) ein Paar Rückhaltearme (59) umfasst, die an gegenüberliegenden Seiten des Hebelarms und des Riegelbolzens montiert sind.

9. Drucklöseverriegelung (10) nach Anspruch 2, wobei der Betätigungsvorrichtungsarm an seinem freien Ende einen Kopf aufweist, der bündig in der Außenfläche des Türpaneels sitzt, wenn sich der Riegel in der geschlossenen Position befindet, und sich nach außen quer zum Türpaneel erstreckt, wenn sich die Verriegelung in der offenen Position befindet.

10. Drucklöseverriegelung (10) nach einem der Ansprüche 1 bis 9, wobei der Kopf des Riegelbolzens an einem Rahmen anliegt, wenn der Riegelbolzen in der geschlossenen Position ausgerichtet ist.

11. Drucklöseverriegelung (10) nach einem der Ansprüche 1 bis 10, der einen aus Elastomermaterial hergestellten Dämpfer beinhaltet, der am Kopf des Riegelbolzens befestigt ist.

## Revendications

1. Verrou de libération de pression (10) configuré pour verrouiller de manière libérable en position fermée un panneau de porte (DP) sur un cadre auquel le panneau de porte est relié de manière articulée, comprenant :
a. une base (12) présentant une extrémité proximale (12a), une extrémité distale (12b), un côté supérieur (12c), un côté inférieur (12d), une ouverture centrale (22) et des moyens configurés pour monter le côté inférieur de ladite base sur le panneau de porte ;
b. un pêne demi-tour (14) présentant une tige allongée (14a) avec une extrémité distale, une extrémité proximale et une tête (14b) formée sur l'extrémité proximale, ladite tige dudit pêne demi-tour étant montée par une première broche pivot (29) sur le côté supérieur de ladite base près de l'extrémité proximale de ladite base, et étant rotative entre une position fermée qui verrouille le panneau de porte en position fermée et une position ouverte qui permet au panneau de porte de s'ouvrir ;
c. un actionneur de pêne demi-tour (16) monté par une seconde broche pivot (31) sur le côté supérieur de ladite base et relié à la tige dudit pêne demi-tour, ledit actionneur de pêne demi-tour incluant :
i. des moyens de rotation manuelle permettant de faire tourner ledit pêne demi-tour entre les positions fermée et ouverte depuis le panneau de porte extérieur ;
ii. des moyens de verrouillage permettant de verrouiller le pêne demi-tour en position fermée ;
iii. des moyens de déverrouillage automatique permettant de faire tourner ledit pêne demi-tour en position ouverte lorsqu'une force d'ouverture prédéterminée est appliquée au pêne demi-tour ; et,
iv. des moyens d'étalonnage permettant d'étalonner l'amplitude de la force d'ouverture prédéterminée requise pour libérer automatiquement lesdits moyens de verrouillage,
dans lequel ledit actionneur de pêne demi-tour (16) comprend un tendeur à genouillère à ressort (55) monté de manière pivotante au niveau d'une extrémité par la seconde broche pivot (31) sur l'extrémité distale de ladite base (12) et relié de manière pivotante au niveau de l'autre extrémité à ladite tige (14a)
dans lequel ledit tendeur à genouillère à ressort (55) inclut :
a. un bras de retenue (59) présentant une extrémité distale et une extrémité proximale reliée de manière pivotante audit pêne demi-tour (14a) par une première broche de liaison (61) ;
b. un bras de levier (65) présentant une extrémité proximale reliée de manière pivotante à ladite extrémité distale dudit bras de retenue (59) par une seconde broche de liaison (63), et une extrémité distale montée de manière pivotante sur ladite seconde broche pivot (31) ; et,
c. un ressort (67) qui sollicite ledit bras de levier (65) et ledit bras de retenue (59) vers la tête (14b) dudit pêne demi-tour,
dans lequel ledit ressort comprend un ressort hélicoïdal (67) enroulé autour de ladite seconde broche pivot (31) et présentant des première et seconde branches rayonnantes (67a, 67b), dans lequel l'extrémité libre de ladite première branche (67a) est en contact avec au moins l'une desdites broches de liaison (61, 63) lorsque ledit verrou est orienté au moins en position fermée,
dans lequel lesdits moyens d'étalonnage comprennent un mécanisme à vis qui modifie le degré de déflexion dudit ressort hélicoïdal (67) lorsque ledit verrou est orienté en position fermée,
dans lequel ledit mécanisme à vis comprend une fente de capture (33) et une vis d'étalonnage (34) qui peut être étendue dans et rétractée de ladite fente de capture, et dans lequel l'extrémité libre de ladite seconde branche (67b) se trouve dans ladite fente de capture (33) en contact avec ladite vis d'étalonnage (34) de sorte que le mouvement de ladite vis dans ladite fente de capture (33) modifie le degré de déflexion dudit ressort hélicoïdal (67) et la force qu'il exerce sur le tendeur à genouillère (55), et
dans lequel la base (12) comprend une paire de supports de charnière distaux (26) et la fente de capture (33) s'étend à travers des surfaces planes (26a, 26b) des supports de charnière distaux (26).

2. Verrou de libération de pression (10) selon la revendication 1, dans lequel lesdits moyens de rotation manuelle comprennent un bras d'actionnement (37) relié à la tige dudit pêne demi-tour entre l'extrémité distale de la tige et ladite première broche pivot, dans lequel ledit bras d'actionnement s'étend de ladite tige à travers l'ouverture centrale dans ladite base.

3. Verrou de libération de pression (10) selon l'une quelconque des revendications 1 à 2, dans lequel ladite première broche pivot (29) et ladite seconde broche de liaison (63) définissent un axe excentré, ledit tendeur étant construit et agencé de sorte que ladite première broche de liaison soit désalignée avec ledit axe excentré en position fermée.

4. Verrou de libération de pression (10) selon la revendication 3, dans lequel ladite première broche de liaison tourne au-delà de l'axe excentré pour déplacer ledit pêne demi-tour de la position fermée à la position ouverte lorsque la pression sur ledit pêne demi-tour dépasse la force d'ouverture prédéterminée.

5. Verrou de libération de pression (10) selon la revendication 4, dans lequel la rotation de ladite première broche de liaison au-delà de l'axe excentré libère toute la force de retenue de ladite liaison à genouillère sur ledit pêne demi-tour.

6. Verrou de libération de pression (10) selon l'une quelconque des revendications 3 à 5, dans lequel le moment exercé par ledit tendeur sur le pêne demi-tour passe d'un moment dans le sens inverse des aiguilles d'une montre à un moment dans le sens des aiguilles d'une montre lorsque ladite liaison à genouillère tourne et que ladite première broche de liaison croise ledit axe excentré.

7. Verrou de libération de pression (10) selon la revendication 1, incluant un second ressort de torsion (69) enroulé autour de ladite première broche pivot (29) qui sollicite ledit pêne demi-tour vers la position ouverte.

8. Verrou de libération de pression (10) selon l'une quelconque des revendications 1 à 7, dans lequel le bras de retenue (59) comprend une paire de bras de retenue (59) montés sur des côtés opposés dudit bras de levier et dudit pêne demi-tour.

9. Verrou de libération de pression (10) selon la revendication 2, dans lequel ledit bras d'actionnement présente une tête formée à son extrémité libre qui s'insère à fleur dans la surface extérieure du panneau de porte lorsque le verrou est en position fermée, et s'étend vers l'extérieur transversalement au panneau de porte lorsque le verrou est en position ouverte.

10. Verrou de libération de pression (10) selon l'une quelconque des revendications 1 à 9, dans lequel la tête dudit pêne demi-tour vient en butée contre un cadre lorsque ledit pêne demi-tour est orienté en position fermée.

11. Verrou de libération de pression (10) selon l'une quelconque des revendications 1 à 10, incluant un pare-chocs en matière élastomère fixé à la tête dudit pêne demi-tour.
